# EUROPEAN PATENT APPLICATION

(11) **EP 4 716 157 A1**
(43) Date of publication of application: **25.03.2026**
(21) Application number: 25191859.5
(22) Date of filing: 25.07.2025
(51) Int. Cl.: H04L 9/40, H04L 67/50, H04N 21/2743

(54) **A SYSTEM AND METHOD FOR CERTIFYING ACTIVITY OF A USER DEVICE IN AN ONLINE EVENT**

(30) Priority: 20.09.2024 IT 202400021013
(71) Applicant: Dodo S.r.l., 40134 Bologna (IT)
(72) Inventor: STELLATI, Carlo, Orbetello 58045 (IT); PASINI, Andrea, Bologna 40137 (IT)
(74) Representative: Penza, Giancarlo

(57) **Abstract**

The invention describes a system for certifying activity of a user device in online events (OE) comprising at least one user device (10;20) in a corresponding operating environment (ER_10;ER_20) and an application server (30), wherein the at least one user device (10;20) is adapted to access the online event (OE) by means of an event application (App_OE) and wherein the application server (30) is configured to determine a beginning and an end of a communication between the at least one device (10;20) and the online event (OE) at respective first (t_start) and second (t_end) reference time instants, wherein the at least one user device (10;20) is associated with corresponding monitoring devices (10A,10B;20A ,20B) and wherein, following the first reference time instant (t_start), the at least one monitoring device is configured to record interaction data (D_INTi; i=1..n) with the online event and environment data (D_ERi; i=1..n), and the application server (30) is further configured to command the at least one user device (10;20) to arrange a recording (RS); wherein the user device (10,20) is further configured to arrange the recording (RS) of the activity related to the online event, generate a unique digital signature (DRS) identifying the recording (RS), send the digital signature (DRS) to the application server (30).

The invention further describes a method for actuating the aforesaid system.

## Description

### TECHNICAL FIELD OF APPLICATION

The invention relates to a system for certifying activity of a user device in an online event.

The invention further relates to a method actuated by means of a calculator for certifying activity of a user device in an online event.

In particular, the invention relates to a system and method actuated by means of a calculator for certifying activity of a user device in an online event, wherein at least one user device is provided in a corresponding operating environment, and an application server, wherein the at least one user device is adapted to access the online event by means of an event application provided by the application server, and the description which follows refers to this field of application to simplify the description thereof.

### PRIOR ART

Online events are known, in particular online games and online exam sessions where constant monitoring of participants' behaviour is required. The scope of the invention relates to a certified and non-corruptible control of the behaviour of the participant in the online event.

In the traditional known systems, the control is live and carried out by sight by a special human controller, while the invention allows deferred control.

There is a user privacy problem when data representative of the execution of the online event and possibly video data representative of the user participating in the event are transmitted in real time. This problem is exacerbated when recording the data representative of the execution of the online event.

The known systems are not efficient because they require a constant presence of trained control staff in a number proportional to the number of participants.

Other known systems only provide performance analyses to verify that a competitor's behaviour in an online event, in particular a game, does not excessively deviate from the competitor's average approach to similar events. These techniques do not produce certain results and therefore cannot have legal value.

Such systems also require a large amount of bandwidth to transmit a large amount of data representative of the execution of the online event with the risk of compromising the continuity of the connection.

Furthermore, the known systems do not guarantee the verification of the authenticity of any recording of the transmitted data.

The general object of the present invention is to make a method/system for certifying activity in an online event which obviates the drawbacks of the prior art.

The object of the present invention is to make a method/system for certifying activity in an online event which is improved in terms of the security of the data processed and/or sent.

The object of the present invention is to make a method/system for certifying activity in an online event which is improved in terms of execution efficiency.

A further object of the present invention is to make a method/system for certifying activity in an online event which is improved in terms of bandwidth occupancy.

### SUMMARY OF THE INVENTION

In a first aspect, the invention describes a system for certifying activity of a user device in an online event, according to what is described in claim 1.

Advantageous aspects are described in the dependent claims 2 to 12.

In a second aspect, the invention describes a method actuated by means of a calculator for certifying activity of a user device in an online event, according to what is described in claim 13.

The invention achieves the following technical effects:
- possibility of detecting alterations in the processed and/or sent data which are accessible to both the participating/competing user and the controller;
- the processed data are accessible to both the participating/competing user and the controller and are exchanged in the manners provided for by privacy protection regulations and, in any case, only after the consent of the participating/competing user;
- efficient operation during the online event given the small amount of data to be transmitted and consequent irrelevant bandwidth consumption;
- consequent possibility of access to all users;
- system efficiency, but at the same time, non-invasiveness in relation to the behavioural data of the participants i.e., non-invasiveness in relation to the activity data of the user device associated with the participant.

The aforementioned technical effects/advantages and other technical effects/advantages of the invention will emerge in greater detail from the description, set forth below, of an example of an embodiment given by way of non-limiting approximation with reference to the appended drawings.

### BRIEF DESCRIPTION OF THE DRAWINGS

Figure 1A is a schematic view of a first embodiment of the invention.
Figure 1B is a schematic view of a second embodiment of the invention.
Figure 2 is a schematic view of a detail of the system of Figure 1 or 2.

### DETAILED DESCRIPTION

The invention describes a system for certifying activity of a user device in online events comprising at least one user device in a corresponding operating environment and an application server, wherein the at least one user device is adapted to access the online event by means of an event application and wherein the application server is configured to determine a beginning and an end of a communication between the at least one device and the online event at respective first and second reference time instants, wherein the at least one user device is associated with corresponding monitoring devices and wherein, following the first reference time instant, the at least one monitoring device is configured to record interaction data and environment data and the application server is further configured to command the at least one user device to arrange a recording; wherein the user device is further configured to arrange the recording of the activity related to the online event, generate a unique digital signature identifying the recording, send the digital signature to the application server.

The term "activity", in the present invention, means the set of actions of the user device, whether single or associated with other devices, during an online event; that is, the activity of a user device is represented by the set of programs and/or functions and/or data exchanges which occur during an online event and involve the user device.

The user device, according to the invention, is an electronic device associated with a user participating in the online event, whose behaviour during the online event is controlled through the activity of the device.

In the case of an online sporting event, the participant comprises one of the two players/competitors of a chess game, or one of the players of a poker game, or one of the participants in an online regatta, etc. who participates in the event through the user device.

In the case of an online exam or competition, the participant comprises the examinee who participates in the event through the user device.

The application server, according to the invention, acts as a controller of the execution of the online event.

That is, the application server controls, manages and allows the participation and performance of the event. From an implementation point of view, the application server represents the application back-end of the platform which allows the management of the event, hereinafter indicated with APP-OE.

In the case of an online sporting event, the controller comprises the referee of the sporting event.

In the case of an online exam or competition, the controller comprises the examiner.

Preferably the online event comprises a game played online, a generic online competition, an online exam session or the like actuated by a single user through a corresponding user device.

Alternatively, the online event can be followed by multiple users by means of corresponding user devices.

Merely by way of example, a game played online can be a game of chess and/or a game of poker/or bingo or the like.

The operating environment or event room is specific to each type of event and is a virtual room which provides all the application software functions for participation in the event.

Merely by way of non-limiting description, the operating environment or event room comprises a game board, a poker table, a sequence of questions in the case of a quiz, etc.

From an implementation point of view, the event room represents the application front-end of the platform which allows the management of the event, hereinafter indicated with APP-OE.

In a first aspect, the invention describes a system for certifying activity of a user device in an online event OE.

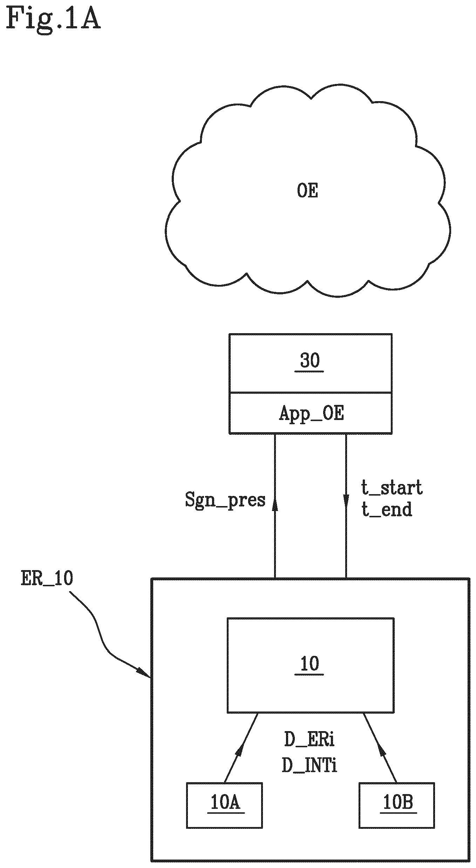

With reference to Figure 1A, in a first embodiment of the invention, the system comprises a single user device 10.

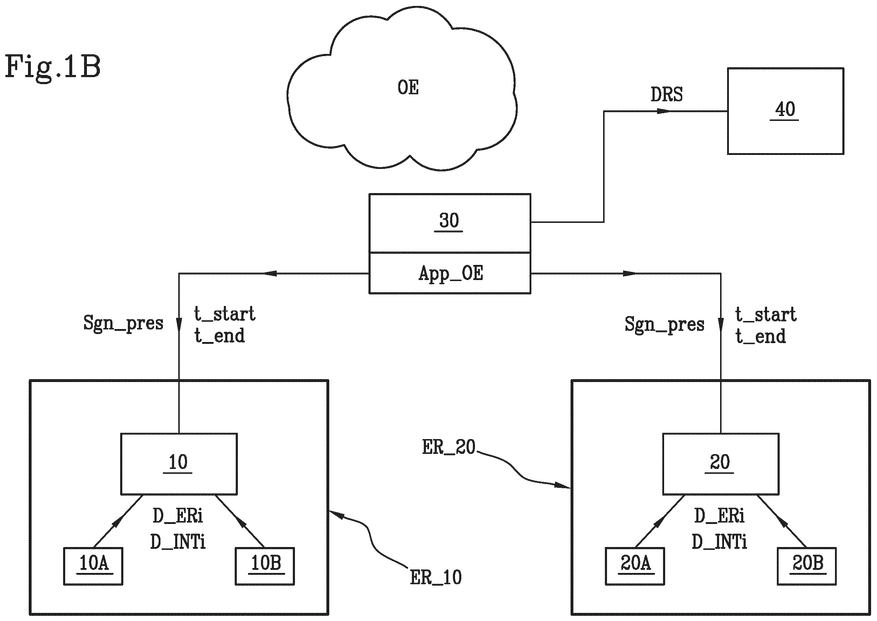

With reference to Figure 1B, in a second embodiment of the invention, the system comprises two user devices 10,20; in general in the second embodiment two or more user devices are provided.

Throughout the description, when reference will be made to a generic user device, it will be understood that the described specifications will apply indifferently to both embodiments of the invention.

In more detail, with reference to Figures 1A and 1B, each user device 10,20 is located in a corresponding operating environment ER_10, ER_20. The system further comprises an application server 30 configured to determine a beginning and an end of a communication between the at least one device 10,20 and the online event OE at respective first t_start and second t_end reference time instants.

The at least one user device 10,20 is adapted to access the online event OE by means of an event application App_OE arranged by the application server 30.

Such an application can also be downloaded, installed on the user device 10,20, or a version implemented directly in a browser-oriented language can be used without the need for an installation by the user.

In particular, in the online chess game, the event application App_OE represents the virtual chessboard and controls all the user's interactivity with the application server 30.

Preferably, the user device 10, 20 comprises an interface by means of which the user interacts with the application server 30.

That is, the interface allows the user to access the online event OE by means of his/her credentials, communicate with the other users, plan his/her online activity (register for tournaments, etc.), identify a further user for a game and finally the possibility to play a game.

In general, it should be noted that in the present context and in the subsequent claims, the user devices 10, 20 comprise processing units presented as split into distinct functional modules for the sole purpose of describing the functions thereof clearly and completely.

In reality, such processing units can consist of a single electronic device, suitably programmed to perform the functions described, and the different modules can correspond to hardware entities and/or routine software forming part of the programmed device.

Alternatively, or in addition, such functions can be performed by a plurality of electronic devices over which the aforesaid functional modules can be distributed.

The processing units can make use of one or more processors for executing the instructions contained in the storage or operating modules.

In more detail, the at least one user device 10,20 is arranged to transmit a presence signal Sgn_pres to the application server 30.

In particular, the presence signal Sgn_pres communicates to the application server that the user device is connected and ready to participate in the online event so that the application server 30 can enable communication between the single user device 10 (Fig. 1A) or between each user device 10, 20 (Fig. 1B) and the application server 30 and, consequently, can allow the participation in the online event OE by the single user or multiple users.

In particular, the application server 30 is configured to determine a beginning and an end of the communication with the at least one device 10,20 at the respective first t_start and second t_end reference time instants, based on the presence signal Sgn_pres.

Preferably each user device 10, 20 comprises a reception module 101, 201 configured to receive a first reference time instant t_start from the application server 30.

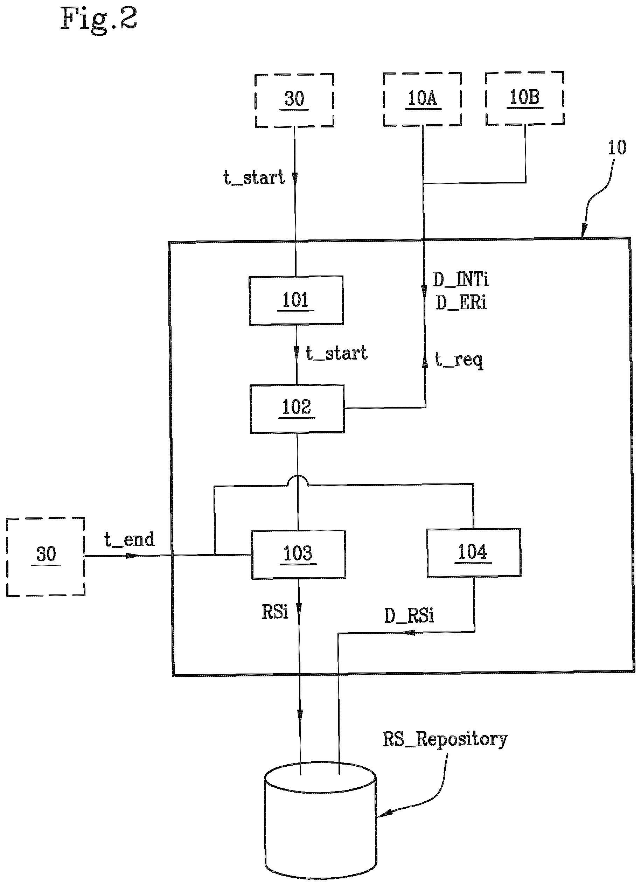

In Figure 2, the module 101 is shown. In general, a corresponding reception module is provided for each user device.

Each user device 10;20 is further associated with corresponding environment monitoring devices 10A, 10B;20A, 20B arranged to monitor the operating environment ER_10; ER_20.

Always with reference to Figures 1A and 1B, the environment devices 10A,10B;20A,20B comprise at least one camera 10A, 20A and at least one microphone 10B, 20B configured to acquire and record video and audio data representative of the operating environment ER_10; ER_20.

In an embodiment, the environment devices 10A, 10B;20A, 20B comprise at least two cameras.

In other embodiments, the environment devices 10A, 10B;20A, 20B comprise more than two cameras.

In each embodiment, at least a first camera 10A is arranged to acquire images representative of the user and at least a second camera 20A is arranged to acquire images representative of the operating environment ER_10, ER_20.

With such a camera structure, it is possible to monitor the activities carried out around the user device 10, 20 to control the player or examinee user so as to record the presence of other people or other monitors which can interact with the user to modify the activity of the user device 10,20.

The monitoring devices, following the first reference time instant t_start, are configured to record interaction data D_INTi, i=1..n between the user device 10,20 and the online event OE, in particular by storing data exchanged between the user device and the online event, and environment data D_ERi; i=1..n, in particular by capturing and recording video data and audio data representative of the operating environment ER_10, ER_20.

That is, by means of the monitoring devices it is possible to monitor and record the data, exchanged, the audio and video of the activity performed in the operating environment ER_10, ER_20, and in particular, around and on the same user device 10, 20.

Therefore, the environment data D_Eri, i=1..n and the interaction data D_INTi, i=1..n can also be consulted after the end of the online event.

According to the invention, the activity of the user device in the online event is identified at least by the environment data D_ERi and by the interaction data D_INTi.

In an embodiment of the invention, the user device 10, 20 is further configured to control each application App_exe locally running in the background on the same user device 10,20.

In this case, the activity of the user device in the online event also comprises each application App_exe running in the background, in addition to the environment data D_ERi and the interaction data D_INTi.

With reference to Figure 2, each user device 10, 20 further comprises a local recording module 102 configured to, following the first reference time instant t_start, record t_req the environment data D_Eri and the interaction data D_INTi with the online event.

In particular, the local recording module 102, following the first reference time instant t_start, accesses active peripherals, for example monitors, cameras and microphones, to record the activities thereof.

The local recording module 102, by means of the cameras, records a scene which represents everything which occurs on each of the monitors of the device, in addition to the movements of the player and the physical game room, and, by means of the microphones, records the environmental noises.

That is, the user device sends a request signal t_reg to the environment devices 10A, 10B, 20A, 20B to activate them and record the environment data D_ERi, i=1...n.

The local recording module 102 is configured to locally record the received environment data D_Eri, i=1..n from each environment device following the request t_req and the interaction data D_INTi with said online event.

Preferably, the local recording module 102 is further configured to record each application App_exe running in the background on the user device 10,20*RS.*

In particular, each environment device determines a relative recording *RS_i.*

Each of the recordings *RS_i* comprises temporal references identifying time instants ti comprised in the time interval Δt defined between the first reference time instant t_start and the second time instant t_end.

Therefore, a memory Rs_Repository is populated by combining the recordings RS_i as a function of the temporal references.

It is thereby possible to synchronise the different environment data and the interaction data with said online event received from each environment device.

Preferably, the application server 30 is configured to determine a beginning and an end of the communication between the at least two devices 10, 20 at the respective first t_start and second t_end reference time instants, based on the presence signal Sgn_pres.

In more detail, the application server 30 is configured to determine the beginning of the communication after verifying a presence of the local recording module (recorder) 102 on the user device 10, 20.

In particular, the application server 30 is configured to, following the termination of the communication at the second time instant t_end and with reference to the time interval Δt comprised between the initial and final time instants, command the at least one user device 10,20 to arrange the recording RS corresponding to the activity of the user device in the online event *RS.*

According to the invention, the user device 10,20 is then configured to arrange the recording RS of the activity of the user device in the online event on the user device 10,20 itself.

According to the invention, the user device 10,20 comprises a recording termination module 103 configured to, following the second reference time instant t_end, arrange the recording RS of the activity on the user device 10,20.

That is, the user device 10,20, following the second reference time instant t_end, consolidates in a single file, for example a zip file, the activity of the user device which occurred between the first reference time instant t_start and the second reference time instant t_end.

According to the invention, such an activity comprises at least the environment data, the interaction data with the online event and, preferably, each application running in the background on the user device. According to the invention, the user device 10,20 is further configured to, following the termination of the communication at the second time instant t_end, generate a unique digital signature DRS_i identifying the recording RS, thereby certifying the activity carried out by the user device.

A signature generation module 104 is arranged for such a purpose.

The user device 10,20 saves the generated recording RS and signature DRS in a local repository RS-REPOSITORY.

Each recording RS produced therefore has a signature DRS associated therewith, and is associated with an online event and the controlled user device 10,20.

According to the invention, the user device 10,20 is further configured to send the generated digital signature DRS to the application server 30.

According to the invention, the application server 30 is configured to receive the digital signature DRS and to replicate it and/or distribute it and/or make it public.

In particular, the application server 30 is configured to send a copy of the digital signature DRS to a controller 40 which, in particular, can store the digital signature in an associated storage module.

Thereby, according to the invention, no sensitive data, present in the recording RS, are transmitted. Only one non-sensitive datum, i.e., the signature DRS, is made public through the application server 30.

The recording RS therefore remains on the user device 10,20 of the controlled user and can be extracted later, when, for any reason, the controller 40 will request it from the controlled user, in accordance with the regulation of the event. At that time, the user device of the controlled user will provide the recording RS to the controller, who can verify the validity thereof (non-manipulation) by means of the signature DRS in his/her possession.

Preferably, the controller 40 is configured to reconstruct, at a third reference time t3 subsequent to the second time instant t_end, each online event OE accessed by the at least one user device 10, 20 by requesting from the at least one user device 10,20 the respective recording of the activity of the device identified based on the unique digital signature DRS identifying the recording which the controller 40 previously received from the application server 30. RS

That is, the recording arranged by the user devices and managed for consultation by the application server 30 can be imported by the controller so that, upon completion of the event, the correct participation of the at least one user in the event itself can be controlled.

Operationally, the controller device 40 is configured to receive from each user device 10,20 the signed recording, verify the authenticity of the recording by comparing the digital signature DRS received from the user device with the digital signature received from the application server 30 and, if the two signatures correspond, analyse and validate the online event OE.

### RSRS

Advantageously, the controller 40 can verify that the recording RSRS is representative of the actual online event OE and that it has not been modified.

In a second aspect, the invention describes a method for certifying activity of a user device in an online event OE comprising the steps of
- arranging at least one user device 10,20 in a corresponding operating environment or event room ER_10,ER_20 and an application server 30, wherein said at least one user device 10,20 is adapted to access said online event OE by means of an event application App_OE arranged by the application server 30, and wherein the application server 30 is configured to determine a beginning and an end of a communication between the at least one user device 10,20 and the online event OE at respective first t_start and second t_end reference time instants;
- arranging monitoring devices 10A,10B;20A,20B arranged to monitor the operating environment ER_10;ER_20 connected to said at least one user device 10;20;
- recording, following the first reference time instant t_start, interaction data D_INTi; i=1..n with the online event and environment data D_ERi; i=1..n, by means of the monitoring devices, wherein at least the environment data D_ERi and the interaction data D_INTi identify the activity of the user device in the online event;
- commanding the at least one user device 10;20 to arrange a recording RS corresponding to the activity of the user device in the online event following the termination of communication at the second time instant t_end with reference to a time interval Δt comprised between the first t_start and the second t_end reference time instants by means of the application server 30;
- having the at least one user device 10,20 arrange the recording RS of the activity of the user device in the online event and generate a unique digital signature DRS identifying the recording RS, thereby certifying the activity;

- sending the digital signature DRS to the application server 30.

The method according to the invention further comprises operating steps attributable to the functions and interactions of the devices are described with reference to the first aspect of the invention.

A system and a method for certifying activity of a user device in an online event (OE) have been described.

The invention achieves the following technical effects:
- possibility of detecting alterations in the processed and/or sent data which are accessible to both the participating/competing user and the controller;
- the processed data are accessible to both the participating/competing user and the controller and are exchanged in the manners provided for by privacy protection regulations and, in any case, only after the consent of the participating/competing user;
- efficient operation during the online event given the small amount of data to be transmitted and consequent irrelevant bandwidth consumption;
- consequent possibility of access to all users;
- system efficiency, but at the same time, non-invasiveness in relation to the behavioural data of the participants i.e., non-invasiveness in relation to the activity data of the user device associated with the participant.

## Claims

1. A system for certifying activity of a user device in an online event (OE), comprising
at least one user device (10;20) in a corresponding operating environment or event room (ER_10;ER_20) and an application server (30), wherein said at least one user device (10;20) is adapted to access said online event (OE) by means of an event application (App_OE) provided by said application server (30), and wherein said application server (30) is configured to determine a beginning and an end of a communication between said at least one user device (10;20) and said online event (OE) at respective first (t_start) and second (t_end) reference time instants, wherein:
- said at least one user device (10;20) is associated with corresponding monitoring devices (10A,10B;20A,20B) arranged to monitor said operating environment (ER_10;ER_20) wherein, following said first reference time instant (t_start), said at least one monitoring device is configured to record interaction data (D_INTi; i=1..n) with said online event and environment data (D_ERi; i=1..n), wherein at least said environment data (D_ERi; i=1..n) and said interaction data (D_INTi; i=1..n) identify said activity of said user device in said online event;
- and said application server (30) is further configured to command said at least one user device (10;20) to arrange a recording (RS) corresponding to said activity of said user device in said online event, following said termination of said communication at said second time instant (t_end) and with reference to a time interval (Δt) comprised between said first (t_start) and second (t_end) reference time instants;
- wherein said user device (10,20) is further configured to
o arrange said recording (RS) of said activity of said user device in said online event on said user device (10,20);
∘ generate a unique digital signature (DRS) identifying said recording (RS), thereby certifying said activity;
∘ send said digital signature (DRS) to said application server (30).

2. The system according to claim 1 wherein, following said first reference time instant (t_start),
- said at least one user device (10;20) is configured to control each application (App_exe) locally running in the background on the same user device (10;20) and
- each said application (App_exe) running in the background identifies said activity of said user device in said online event, together with said environment data (D_ERi; i=1..n) and said interaction data (D_INTi; i=1..n).

3. The system according to claim 1 or 2, wherein said application server (30) is configured to receive said digital signature (DRS) and to replicate it and/or distribute it and/or make it public.

4. The system according to claim 1 or 2 or 3, wherein each user device (10; 20) comprises:
∘ a reception module (101) configured to receive said first reference time instant (t_start) and
∘ a local recording module (recorder) (102) configured to, following said first reference time instant (t_start),
▪ record (t_req) said environment data (D_ERi; i=1..n) said interaction data (D_INTi; i=1..n) with said online event;
∘ a recording termination module (103) configured to, following said second reference time instant (t_end), arrange said recording (RS) of said activity RS on said user device (10;20);
∘ a signature generation module (104) configured to generate a unique digital signature (DRS) identifying said recording (RS), thereby certifying said activity.

5. The system according to claim 4, wherein
said local recording module (recorder) (102) is configured to, following said first reference time instant (t_start), record every application (App_exe) running in the background on said user device (10;20) and
said recording termination module (103) configured to, following said second reference time instant (t_end), arrange said recording (RS) of said activity on said user device (10;20).

6. The system according to any one of the preceding claims, wherein said environment devices (10A,10B;20A,20B) comprise at least one camera (10A, 20A) and at least one microphone (10B, 20B) configured to acquire and record video and audio data representative of the operating environment (ER_10; ER_20).

7. The system according to claim 6, wherein said environment devices (10A,10B;20A,20B) comprise at least two cameras, a first camera (10A) arranged to acquire images representative of the user operating on said user device (10,20) and at least a second camera (20A) which is arranged to acquire images representative of the operating environment (ER_10;ER_20).

8. The system according to any one of the preceding claims, wherein:
said user devices (10;20) is arranged to transmit a presence signal (Sgn_pres) to said application server (30); and
said application server (30) is configured to determine a beginning and an end of said communication with said at least one device (10;20) at said respective first (t_start) and second (t_end) reference time instants, based on said presence signal (Sgn_pres).

9. The system according to any one of claims 3 to 8, wherein said application server (30) is configured to determine said start of said communication upon verification of a presence of said local recording module (recorder) (102).

10. The system according to any one of the preceding claims, wherein said application server (30) is configured to transmit said digital signature (DRS) associated with said registration (RS) and said at least one user device (10,20) to a controller (40).

11. The system according to the preceding claim, wherein said controller (40) is configured to
- receive from the application server (30) said unique digital signature (DRS) identifying said recording (RS_i) of said activity associated with said online event (OE);
- receive said signed recording (RS; RS_i) from said at least one user device (10.20);
- verify the authenticity of the recording (RS) received by comparing said digital signature (DRS) received from said at least one user device (10,20) with said digital signature received from said application server (30);
- if the two signatures match, analyse and validating the online event (OE).

12. A method implemented by means of a calculator for certifying the activity of a user device in an online event (OE) comprising the steps of
- arranging at least one user device (10;20) in a corresponding operating environment or event room (ER_10;ER_20) and an application server (30), wherein said at least one user device (10;20) is adapted to access said online event (OE) by means of an event application (App_OE) arranged by said application server (30), and wherein said application server (30) is configured to determine a beginning and an end of a communication between said at least one user device (10;20) and said online event (OE) at respective first (t_start) and second (t_end) reference time instants;
- arranging monitoring devices (10A,10B;20A,20B) arranged to monitor said operating environment (ER_10;ER_20) connected to said at least one user device (10;20);
- recording, following said first reference time instant (t_start), interaction data (D_INTi; i=1..n) with said online event and environment data (D_ERi; i=1..n), by means of said monitoring devices, wherein at least said environment data (D_ERi; i=1..n) and said interaction data (D_INTi; i=1..n) identify said activity of said user device (10;20) in said online event (OE);
- commanding said at least one user device (10;20) to arrange a recording (RS) corresponding to said activity of said user device in said online event following said termination of said communication at said second time instant (t_end) and with reference to a time interval (Δt) comprised between said first (t_start) and second (t_end) reference time instants by means of said application server (30);
- by means of said at least one user device (10,20) arranging said recording (RS) of said activity of said user device in said online event and generating a unique digital signature (DRS) identifying said recording (RS), thereby certifying said activity;
- sending said digital signature (DRS) to said application server (30).
